# DEMANDE DE BREVET EUROPEEN

(11) **EP 4 834 665 A1**
(43) Date de publication de la demande: **04.11.2026**
(21) Numéro de dépôt: 26174760.4
(22) Date de dépôt: 27.04.2026
(51) Int. Cl.: B60R 19/18

(54) **PANNEAU D'HABILLAGE POUR VÉHICULE AUTOMOBILE COMPRENANT UNE ZONE DE TRANSMISSION DE LUMIÈRE EN POLYURÉTHANE THERMODURCISSABLE**

(30) Priorité: 28.04.2025 FR 2504485
(71) Demandeur: OPmobility SE, 69007 Lyon (FR)
(72) Inventeur: BANRY, Pascal, 01150 Sainte-Julie (FR); BOISSON, Damien, 01150 Sainte-Julie (FR)
(74) Mandataire: LLR

(57) **Abrégé**

Le panneau d'habillage (4) pour véhicule automobile (1), comprend :
- au moins une zone de transmission de lumière (7) réalisée en un premier matériau plastique apte à permettre une transmission lumineuse,
- au moins une zone de masquage (8) contiguë à la zone de transmission de lumière (7) et réalisée au moins en partie en un deuxième matériau plastique ayant une transmittance lumineuse inférieure à une transmittance lumineuse du premier matériau plastique.

Le premier matériau plastique est un polyuréthane transparent ou translucide.

## Description

### Domaine technique

L'invention concerne un panneau d'habillage pour véhicule automobile, ainsi qu'un module d'habillage, une face avant de véhicule automobile ou un véhicule automobile comprenant un tel panneau d'habillage. L'invention concerne également un procédé de fabrication d'un tel panneau d'habillage.

### État de la technique

On connaît déjà dans l'état la technique un véhicule automobile comprenant une face avant comprenant notamment un module d'habillage pouvant intégrer des fonctionnalités techniques, telles que des capteurs ou des organes de signalisation, et des fonctionnalités esthétiques, telles que des décorations ou des organes de diffusion de motifs lumineux. Un tel module d'habillage présente une forte valeur ajoutée, est couteux à fabriquer et relativement lourd.

Le panneau d'habillage comprend classiquement au moins une zone de transmission de lumière, réalisée en un premier matériau apte à permettre une transmission de lumière et au moins une zone de masquage contiguë à la zone de transmission, la zone de masquage étant généralement opaque à la lumière visible ou semi-transparente. La zone de transmission de lumière permet notamment le passage de la lumière depuis l'intérieur du module d'habillage vers l'extérieur afin, par exemple, de transmettre un signal lumineux, d'éclairer la route ou de faire apparaitre des éléments de décoration. La zone de masquage permet, elle, de dissimuler des éléments techniques, tels que des capteurs, des interfaces de fixation ou des éléments d'étanchéité, afin d'améliorer l'aspect esthétique du véhicule. Classiquement, le panneau d'habillage est formé d'au moins une pièce réalisée par moulage en un premier matériau transparent, par exemple du polycarbonate transparent à la lumière visible, et d'au moins une autre pièce, réalisée en un deuxième matériau opaque, par exemple en polycarbonate opaque, surmoulée sur la première pièce au niveau d'au moins une zone du panneau d'habillage que l'on souhaite rendre opaque.

De tels pièces donnent des résultats satisfaisants. Toutefois, on cherche constamment à fournir un panneau d'habillage qui soit plus simple et plus économique à fabriquer, tout en étant le plus léger possible.

### Résumé de l'invention

L'invention a notamment pour but de fournir un panneau d'habillage pour véhicule automobile qui soit léger et simple et économique à fabriquer.

À cet effet, l'invention a pour objet un panneau d'habillage pour véhicule automobile, comprenant :
- au moins une zone de transmission de lumière réalisée en un premier matériau plastique apte à permettre une transmission lumineuse,
- au moins une zone de masquage contiguë à la zone de transmission de lumière et réalisée au moins en partie en un deuxième matériau plastique ayant une transmittance lumineuse inférieure à une transmittance lumineuse du premier matériau plastique,
caractérisé en ce que le premier matériau plastique est un polyuréthane transparent ou translucide.

L'utilisation d'un polyuréthane transparent ou translucide en tant que premier matériau plastique est particulièrement avantageuse. Tout d'abord, contrairement à d'autres matériaux plastiques transparents ou translucides, tels que le polycarbonate transparent ou translucide, le polyuréthane ne nécessite pas d'appliquer sur sa face extérieure une couche de vernis protectrice afin de la protéger d'attaques mécaniques, chimiques ou physiques. Ainsi, dans la zone de transmission de lumière, il est possible d'utiliser uniquement du premier matériau plastique et aucun matériau supplémentaire, tel qu'un vernis de protection. Il est ainsi possible de limiter l'épaisseur du panneau d'habillage dans la zone de transmission de lumière et donc de limiter le poids du panneau d'habillage et d'en simplifier la fabrication. Par ailleurs, le polyuréthane a des propriétés d'auto-cicatrisation, lui permettant de se réparer spontanément à la suite d'un petit impact ou d'une rayure, tels que ceux provoqués par une projection de gravier.

La zone de transmission de lumière permet la transmission lumineuse d'au moins une partie de la lumière qui la traverse. Selon les modes de réalisation, elle peut être transparente ou translucide. Un élément est qualifié de transparent lorsqu'il se laisse traverser par la lumière, de préférence dans le domaine du visible, des infra-rouges ou de l'ultraviolet. Dans le cas de la lumière visible, un élément transparent permet de distinguer les objets nettement à travers son épaisseur. On considère qu'un élément est transparent lorsqu'il présente une transmittance supérieure ou égale à 85 %. Dans le cas de la lumière visible, un élément est qualifié de translucide lorsqu'il se laisse traverser par la lumière dans le domaine du visible, mais sans permettre de distinguer nettement les objets. Un élément translucide est alors un élément au travers duquel on voit flou. On considère qu'un élément ayant une transmittance supérieure ou égale à 50% environ et inférieure à 85 % est translucide. La transmittance ou transmission lumineuse d'un matériau est la fraction du flux lumineux le traversant. Ainsi la transmittance représente le rapport de l'intensité lumineuse transmise par le matériau sur l'intensité lumineuse incidente.

La zone de masquage permet de dissimuler depuis l'extérieur des éléments techniques, tels que des capteurs, des interfaces de fixation ou des éléments d'étanchéité, afin d'améliorer l'aspect esthétique du véhicule. Selon certains modes de réalisation, la zone de masquage peut être opaque, semi-transparente ou translucide. Un élément est opaque lorsqu'il ne laisse pas passer la lumière, par exemple la lumière visible. Un élément est semi-transparent lorsqu'il permet la transmission de lumière dans le domaine du visible émise par une source de lumière visible avec une éventuelle absorption partielle de lumière, mais empêche la transmission de la lumière visible naturelle. Ainsi, une zone de masquage semi-transparente permet à la fois de dissimuler depuis l'extérieur des éléments agencés derrière elle tout en permettant la transmission de lumière vers l'extérieur d'une partie d'une lumière émise par une source de lumière dissimulée derrière la zone de masquage. Dans le mode de réalisation où la zone de masquage est translucide, il est prévu que la transmittance de la zone de masquage reste inférieure à la transmittance de la zone de transmission de lumière.

L'invention peut comporter l'une ou plusieurs des caractéristiques optionnelles suivantes, prises seules ou en combinaison.

Le premier matériau plastique est un polyuréthane thermodurcissable transparent ou translucide. L'utilisation de polyuréthane thermodurcissable transparent ou translucide permet de faciliter la fabrication du panneau d'habillage par rapport à d'autres matériaux, tel que le polycarbonate transparent ou translucide. En particulier, le polyuréthane thermodurcissable peut être moulé à des pressions et températures bien inférieures à celles utilisées pour le moulage d'autres matériaux, tel que le polycarbonate transparent ou translucide. Ainsi, le coût énergétique, et donc le coût économique, sont réduits. L'utilisation de plus faibles pressions de moulage permet en outre d'utiliser des presses de plus petites dimensions qui sont moins chères. Par ailleurs, le fait que le polyuréthane soit thermodurcissable et non thermoplastique permet, toute chose égale par ailleurs, d'obtenir une zone de transmission de lumière qui est plus transparente, qui a une meilleure résistance aux rayonnements ultraviolets et une meilleure rigidité permettant d'améliorer la résistance structurelle du panneau d'habillage.

Le deuxième matériau plastique est un matériau thermoplastique opaque à la lumière, semi-transparent ou translucide. Selon les modes de réalisation, on peut par exemple prévoir que le deuxième matériau plastique est un matériau thermoplastique opaque à la lumière visible, aux rayonnements ultraviolets ou aux rayonnements infra-rouges. On comprend que lorsque le deuxième matériau plastique est semi-transparent ou translucide, cette semi-transparence ou cette translucidité se réfèrent à la lumière visible comme il l'est indiqué pour la définition de ces termes mentionnés ci-dessus.

Selon un mode de réalisation, au moins un insert est surmoulé au moins en partie par le premier matériau plastique. Le fait d'utiliser du polyuréthane thermodurcissable en tant que premier matériau plastique permet avantageusement une intégration simple par surmoulage de différents types d'inserts. En particulier, on remarque que le moulage du polyuréthane thermodurcissable, contrairement par exemple au moulage de polyuréthane thermoplastique, se fait à basse pression et à basse température. Ainsi, le surmoulage d'insert par le premier matériau plastique peut se faire sans risquer d'endommager l'insert. On remarque en outre qu'on obtient ainsi un procédé de fabrication plus économique puisque, les températures et pressions utilisées étant faibles, la consommation électrique

De préférence, l'insert est choisi parmi un film lumineux, par exemple un film OLED, un film décoratif, un film chauffant, un film électronique, un emblème et un capteur. Il est ainsi possible d'ajouter de manière simple différentes fonctions supplémentaires au panneau d'habillage. Un film lumineux a, par exemple, une fonction décorative et/ou d'éclairage. Un film chauffant a, par exemple, une fonction de dégivrage d'au moins une partie du panneau d'habillage. Cette fonction est par exemple particulièrement utile pour assurer une transmission de lumière satisfaisante pour la zone de transmission de lumière. Le film électronique est par exemple un film capacitif. Par ailleurs, différents capteurs peuvent être intégrés dans le premier matériau plastique afin d'apporter différentes fonctions de détection.

De préférence, l'épaisseur du panneau d'habillage dans la zone de transmission de lumière est comprise entre 1,5 et 3,5 mm, de préférence comprise entre 1,5 et 2,5 mm. L'utilisation de polyuréthane permet d'obtenir une zone de transmission de lumière particulièrement fine. En particulier, l'utilisation de polyuréthane permet de s'affranchir de l'utilisation d'un vernis de protection, ajoutant de la masse et de l'épaisseur au panneau d'habillage.

L'invention a également pour objet un module d'habillage pour véhicule automobile, comprenant un panneau d'habillage tel que décrit précédemment.

L'invention a en outre pour objet une pièce de carrosserie de véhicule automobile comprenant un panneau d'habillage tel que décrit précédemment. Selon les modes de réalisation, la pièce de carrosserie est, par exemple, une face avant de véhicule automobile, un hayon de véhicule automobile, une porte latérale de véhicule automobile ou une aile de véhicule automobile.

L'invention a aussi pour objet un véhicule automobile comprenant un panneau d'habillage tel que décrit précédemment.

Enfin, l'invention a pour objet un procédé de fabrication d'un panneau d'habillage pour véhicule automobile, le panneau d'habillage étant tel que décrit précédemment, procédé dans lequel :
a) on moule une première partie du panneau d'habillage, destinée à former au moins une zone de masquage du panneau d'habillage, avec un matériau plastique, dit deuxième matériau plastique,
b) on surmoule la première partie du panneau d'habillage avec un polyuréthane transparent ou translucide, dit premier matériau plastique, le deuxième matériau plastique ayant une transmittance lumineuse inférieure à une transmittance lumineuse du premier matériau plastique, formant ainsi au moins une zone de transmission de lumière du panneau d'habillage.

Selon un mode de réalisation préféré, le premier matériau plastique est un polyuréthane thermodurcissable transparent ou translucide.

De préférence, l'étape de surmoulage est réalisée à une pression comprise entre 20 et 100 bar. De telles valeurs de pression sont suffisantes pour le moulage de polyuréthane thermodurcissable, tout en étant suffisamment faibles pour réduire le coût énergétique du procédé de fabrication et permettre l'incorporation d'insert dans le premier matériau plastique.

De préférence, l'étape de surmoulage est réalisée à une température comprise entre 80 et 120°C. De telles valeurs de températures sont suffisantes pour le moulage de polyuréthane thermodurcissable, tout en étant suffisamment faibles pour réduire le coût énergétique du procédé de fabrication et permettre l'incorporation d'insert dans le premier matériau plastique.

### Brève description des figures

L'invention sera mieux comprise à la lecture de la description qui va suivre donnée uniquement à titre d'exemple non limitatif et faite en se référant aux dessins annexés dans lesquels :
La [Fig. 1] est une représentation schématique en perspective d'une partie avant d'un véhicule automobile comprenant un module d'habillage comprenant un panneau d'habillage selon un mode de réalisation de l'invention ;
La [Fig. 2] est une représentation schématique en perspective du panneau d'habillage de la figure 1.

### Description détaillée

Dans la description détaillée, la direction longitudinale (ou axe X), la direction transversale (ou axe Y) et la direction verticale (ou axe Z) font référence aux directions d'un véhicule automobile et sont illustrés sur les figures.

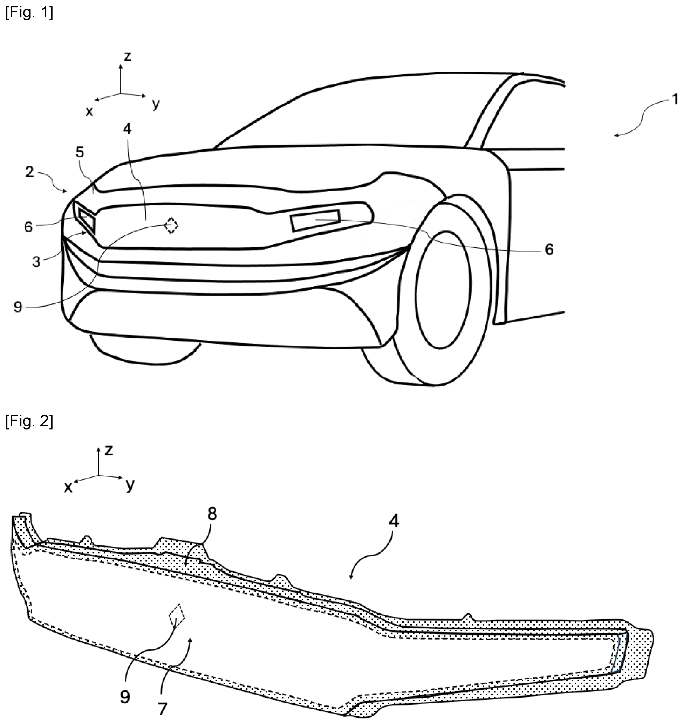

La figure 1 montre la partie avant d'un véhicule automobile 1 qui comprend une face avant 2 comprenant un module d'habillage 3 qui comprend un panneau d'habillage 4. Selon l'invention, on entend par « face avant » la ou les pièces du véhicule automobile 1 délimitant une surface externe visible depuis l'extérieur à l'avant du véhicule automobile 1.

La face avant 2 comprend au moins un panneau principal 5 réalisé en matière plastique. Ce panneau principal 5 présente un orifice dans lequel sont montés le module d'habillage 3 et des unités optiques 6 (figure 1). Dans le cas présent, les deux unités optiques 6 sont intégrées dans le module d'habillage 3 et sont agencées respectivement au niveau de deux extrémités latérales opposées du module d'habillage 3. Cette intégration des unités optiques 6 dans le module d'habillage 3 permet de faciliter le montage de la face avant 2 sur le véhicule automobile 1 et d'améliorer l'esthétisme du véhicule 1 en permettant, par exemple, d'obtenir une continuité de forme, et une absence de jeux d'interface, entre le module d'habillage 3 et les unités optiques 6.

Le module d'habillage 3 est agencé de façon que sa surface externe soit affleurante à la surface externe du panneau principal 5. La surface externe du module d'habillage 3 et la surface externe du panneau principal 5 sont ainsi en continuité de forme afin de créer un effet donnant l'illusion que la face avant 2 est d'un seul tenant. De manière générale, le module d'habillage 3 est de préférence agencé de façon que sa surface externe soit affleurante avec tout élément de carrosserie situé à proximité immédiate du module d'habillage 3. Dans un autre mode de réalisation, le module d'habillage 3 est agencé de façon que sa surface externe soit désaffleurante à la surface, i.e. que sa surface externe soit en retrait par rapport à au moins une partie de la surface externe des éléments de carrosserie situé à sa proximité immédiate, de façon à mieux le protéger en cas de choc.

Selon le mode de réalisation présenté, le module d'habillage 3 a une forme générale allongée s'étendant sur plus de 50 % de la largeur de la face avant 2. Plus particulièrement, dans le cas présent, le module d'habillage 3 s'étend sur environ 90 % de la largeur - c'est-à-dire la dimension suivant l'axe transversal Y- de la face avant 2. Bien entendu, selon des variantes de réalisation, le module d'habillage peut s'étendre sur moins de 50 % ou plus de 90 % de la face avant 2. Le module d'habillage 3 est destiné à être fixé sur une structure support du véhicule automobile 1, par exemple sur la caisse du véhicule automobile 1 ou sur une face avant technique du véhicule 1. Comme illustré à la figure 1, le panneau d'habillage 4 a une forme et des dimensions similaires à celles du module d'habillage 3.

Le module d'habillage 3 comprend un organe de diffusion d'ondes électromagnétiques. Dans le cas présent, cet organe de diffusion d'ondes électromagnétiques est apte à émettre des ondes électromagnétiques dans le spectre visible, communément appelées lumière visible par la suite. Cet organe de diffusion comprend par exemple un guide de lumière couplé à un émetteur de lumière (non représentés). Selon d'autres modes de réalisation, l'organe de diffusion d'ondes électromagnétiques est apte à émettre d'autres types d'ondes électromagnétiques, par exemple des ondes infrarouges ou des rayonnements ultraviolets. On peut prévoir que le module d'habillage 3 comprend plusieurs organes de diffusion d'ondes électromagnétiques, chaque organe étant apte à diffuser un ou plusieurs types d'ondes électromagnétiques.

La panneau d'habillage 4 du module d'habillage 3 forme la surface externe du module d'habillage 3 visible depuis l'extérieur. Le panneau d'habillage 4 forme avec un corps principal (non représenté) du module d'habillage 3 un boitier contenant les différents composants techniques du module d'habillage 3, tels qu'un organe de diffusion d'ondes électromagnétiques, un guide de lumière ou un capteur.

Le panneau d'habillage 4 comprend au moins une zone de transmission de lumière réalisée en un premier matériau plastique apte à permettre une transmission lumineuse. Ce premier matériau plastique est, selon le présent mode de réalisation, un polyuréthane thermodurcissable. Selon ce premier mode de réalisation, le panneau d'habillage 4 comprend une unique zone de transmission de lumière 7. Selon d'autres modes de réalisation, le panneau d'habillage 4 peut comprendre un nombre supérieur de zone de transmission de lumière 7, par exemple entre deux et vingt, de préférence entre deux et dix. Dans le cas présent, la zone de transmission de lumière 7 occupe une plus grande partie de la surface externe du panneau d'habillage 4 et donc du module d'habillage 3. La zone de transmission de lumière 7 permet notamment le passage de la lumière visible depuis l'intérieur du module d'habillage 3 vers l'extérieur afin, par exemple, de transmettre un signal lumineux, d'éclairer la route ou de faire apparaitre des éléments de décoration. Notamment, dans le cas présent où le module d'habillage 3 comprend les unités optiques 6, la zone de transmission de lumière 7 permet le passage de la lumière visible émise par ces unités optiques 6. Le polyuréthane thermodurcissable présente l'avantage d'être particulièrement transparent et donc de permettre un éclairage avec une intensité lumineuse importante.

Dans le cas présent, l'épaisseur du panneau d'habillage 4 dans la zone de transmission de lumière 7 est de préférence comprise entre 1,5 et 2,5 mm. Une épaisseur aussi fine est rendue possible par l'utilisation de polyuréthane thermodurcissable en tant que premier matériau car un tel matériau est particulièrement résistant et ne requiert pas d'application d'une couche supplémentaire de protection, telle qu'une couche de vernis. En diminuant l'épaisseur du panneau d'habillage 4 on réduit son encombrement ainsi que sa masse, ce qui est particulièrement avantageux.

Le panneau d'habillage 4 comprend en outre au moins une zone de masquage 8 contiguë à la zone de transmission de lumière et réalisée au moins en partie en un deuxième matériau plastique. Le deuxième matériau plastique a une transmittance lumineuse inférieure à une transmittance lumineuse du premier matériau plastique. En particulier, dans le cas présent, la zone de masquage 8 est opaque à la lumière visible. Selon une variante de réalisation, on peut prévoir que la zone de masquage 8 est semi-transparente ou translucide, dès lors que le deuxième matériau a une transmittance lumineuse inférieure à une transmittance lumineuse du premier matériau plastique. Dans le cas présent, le deuxième matériau plastique est un matériau thermoplastique opaque tels que, par exemple, le polycarbonate, le polyuréthane thermoplastique ou le polypropylène. La zone de masquage 8 permet notamment de dissimuler des éléments techniques, tels que des interfaces de fixation, des parois techniques, des capteurs ou des éléments d'étanchéité, afin d'améliorer l'aspect esthétique du véhicule. Dans le cas présent, le panneau d'habillage 4 comprend une seule zone de masquage 8 qui s'étend sur toute la périphérie du panneau d'habillage 4. Selon d'autres modes de réalisation, le panneau d'habillage 4 peut comprendre un nombre supérieur de zones de masquage 8, par exemple entre deux et vingt, de préférence entre deux et dix. De plus, selon d'autres modes de réalisation, la zone de masquage 8 ne s'étend pas forcément sur toute ou partie de la périphérie du panneau d'habillage 4.

Comme représenté à la figure 2, le panneau d'habillage 4 comprend un insert 9 surmoulé au moins en partie par le premier matériau plastique du panneau d'habillage 4. Selon le présent mode de réalisation, l'insert 9 est un film chauffant ayant une fonction de dégivrage. Un tel film chauffant permet par exemple d'améliorer la fiabilité de mesure de certains capteurs lorsqu'il est placé en regard d'un tel capteur. Selon d'autres modes de réalisation, on peut prévoir que l'insert 9 soit d'un autre type, par exemple un film lumineux, tel qu'un film OLED, un film décoratif ou un film électronique, tel qu'un film capacitif, ou un emblème. Selon les modes de réalisation, on peut prévoir que le panneau d'habillage 4 comprend plusieurs inserts 9 différents.

On décrit ci-après un procédé de fabrication du panneau d'habillage 4 décrit ci-dessus. Ce procédé comprend les étapes suivantes :
a) On moule une première partie du panneau d'habillage 4, destinée à former la zone de masquage 8 du panneau d'habillage 4, avec le deuxième matériau plastique, par exemple du polycarbonate opaque.
b) On surmoule la première partie du panneau d'habillage réalisée à l'étape précédente avec un polyuréthane thermodurcissable transparent ou translucide, dit premier matériau plastique. Comme indiqué précédemment, le deuxième matériau plastique a une transmittance lumineuse inférieure à une transmittance lumineuse du premier matériau plastique, formant ainsi la zone de transmission de lumière 7 du panneau d'habillage 4. Selon le présent mode de réalisation, préalablement à l'injection de polyuréthane thermodurcissable, on place dans le moule l'insert 9 qui est formé dans le cas présent par un film chauffant de façon que le polyuréthane thermodurcissable surmoule cet insert 9 et l'intègre donc au panneau d'habillage. Le surmoulage de l'insert 9 est rendu possible par les faibles pressions et températures utilisées lors du surmoulage par le polyuréthane thermodurcissable. En particulier, selon le présent mode de réalisation, l'étape de surmoulage est réalisée à une pression comprise entre 20 et 100 bar et à une température comprise entre 80 et 120°C, ce qui prévient le risque d'endommager l'insert 9 lors du surmoulage.

L'invention n'est pas limitée aux modes de réalisation présentés et d'autres modes de réalisation apparaîtront clairement à l'homme du métier. Il est notamment possible, alternativement ou additionnellement, de prévoir que le panneau d'habillage 4 selon l'invention soit intégré dans le véhicule automobile 1 dans une autre pièce de carrosserie que la face avant 2, par exemple dans un hayon, une porte latérale ou une aile.

### Liste de références

1 : véhicule automobile
2 : face avant
3 : module d'habillage
4 : panneau d'habillage
5 : panneau principal
6 : unités optiques
7 : zone de transmission de lumière
8 : zone de masquage
9 : insert

## Revendications

1. Panneau d'habillage (4) pour véhicule automobile (1), comprenant :
- au moins une zone de transmission de lumière (7) réalisée en un premier matériau plastique apte à permettre une transmission lumineuse,
- au moins une zone de masquage (8) contiguë à la zone de transmission de lumière (7) et réalisée au moins en partie en un deuxième matériau plastique ayant une transmittance lumineuse inférieure à une transmittance lumineuse du premier matériau plastique,
**caractérisé en ce que** le premier matériau plastique est un polyuréthane transparent ou translucide.

2. Panneau d'habillage (4) selon la revendication 1, dans lequel le premier matériau plastique est un polyuréthane thermodurcissable transparent ou translucide.

3. Panneau d'habillage (4) selon la revendication 2, dans lequel au moins un insert (9) est surmoulé au moins en partie par le premier matériau plastique.

4. Panneau d'habillage (4) selon la revendication précédente, dans lequel l'insert (9) est choisi parmi un film lumineux, par exemple un film OLED, un film décoratif, une emblème, un film chauffant, un film électronique et un capteur.

5. Panneau d'habillage (4) selon l'une quelconque des revendications précédentes, dans lequel le deuxième matériau plastique est un matériau thermoplastique opaque à la lumière, semi-transparent ou translucide.

6. Panneau d'habillage (4) selon l'une quelconque des revendications précédentes, dans lequel l'épaisseur du panneau d'habillage (4) dans la zone de transmission de lumière (7) est comprise entre 1,5 et 3,5 mm, de préférence comprise entre 1,5 et 2,5 mm.

7. Module d'habillage (3) pour véhicule automobile (1), **caractérisé en ce qu'**il comprend un panneau d'habillage (4) selon l'une quelconque des revendications précédentes.

8. Pièce de carrosserie (2) de véhicule automobile (1) comprenant un panneau d'habillage (4) selon l'une quelconque des revendications 1 à 6.

9. Véhicule automobile (1) comprenant un panneau d'habillage (4) selon l'une quelconque des revendications 1 à 6.

10. Procédé de fabrication d'un panneau d'habillage (4) pour véhicule automobile (1), le panneau d'habillage (4) étant selon l'une quelconque des revendication 1 à 6, procédé dans lequel :
a) on moule une première partie du panneau d'habillage (4), destinée à former au moins une zone de masquage (8) du panneau d'habillage (4), avec un matériau plastique, dit deuxième matériau plastique,
b) on surmoule la première partie du panneau d'habillage (4) avec un polyuréthane transparent ou translucide, dit premier matériau plastique, le deuxième matériau plastique ayant une transmittance lumineuse inférieure à une transmittance lumineuse du premier matériau plastique, formant ainsi au moins une zone de transmission de lumière (7) du panneau d'habillage (4).

11. Procédé selon la revendication 10, dans lequel le premier matériau plastique est un polyuréthane thermodurcissable transparent ou translucide.

12. Procédé selon la revendication 11, dans lequel l'étape de surmoulage est réalisée à une pression comprise entre 20 et 100 bar.

13. Procédé selon la revendication 11 ou 12, dans lequel l'étape de surmoulage est réalisée à une température comprise entre 80 et 120°C.
